(19) Europäisches Patentamt
European Patent Office
Office européen des brevets

(11) **EP 2 871 210 A1**

(12) **EUROPÄISCHE PATENTANMELDUNG**

(43) Veröffentlichungstag:
**13.05.2015 Patentblatt 2015/20**

(21) Anmeldenummer: **13192225.4**

(22) Anmeldetag: **08.11.2013**

(51) Int Cl.:
*C08L 1/00* (2006.01)     *C08L 1/02* (2006.01)
*C08L 23/06* (2006.01)    *C08L 23/12* (2006.01)
*C08L 23/14* (2006.01)    *C08L 23/16* (2006.01)
*C08L 67/04* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Rotho Kunststoff AG**
**5303 Würenlingen (CH)**

(72) Erfinder: **Christian Rytka**
**79713 Bad-Säckingen (DE)**

(74) Vertreter: **Lemcke, Brommer & Partner**
**Patentanwälte Partnerschaft mbB**
**Bismarckstraße 16**
**76133 Karlsruhe (DE)**

(54) **Zusammensetzung für einen Verbundwerkstoff, Verbundwerkstoff, Kunststoff-Formkörper und Verfahren zum Herstellen eines solchen**

(57)     Die vorliegende Erfindung betrifft eine Zusammensetzung für einen Verbundwerkstoff, enthaltend:
- einen Naturfaseranteil aus Zellulosefasern,
- eine Matrix aus mindestens einem thermoplastischen Kunststoff zur Einbettung der Zellulosefasern,
- einen Haftvermittler für die Einbettung der Zellulosefasern in der Matrix, wobei die Zusammensetzung enthält:

- 30 bis 50 Gew-% Zellulosefasern,
- mehr als 45 Gew-% an mindestens einem thermoplastischen Kunststoff,
- weniger als 10 Gew-% Haftvermittler auf Propylen-Maleinsäureanhydrid-Copolymer-Basis, für eine gleichmäßige Einbettung der Zellulosefasern in der Matrix.

EP 2 871 210 A1

**Beschreibung**

Die vorliegende Erfindung betrifft eine Zusammensetzung für einen Verbundwerkstoff. Dieser enthält einen Naturfaseranteil aus Zellulosefasern, eine Matrix aus mindestens einem thermoplastischen Kunststoff zur Einbettung der Zellulosefasern sowie einen Haftvermittler für die Einbettung bzw. Kopplung der Zellulosefasern in der bzw. mit der Matrix. Ferner betrifft die vorliegende Erfindung einen Verbundwerkstoff aus einer solchen Zusammensetzung, einen Kunststoff-Formkörper aus einer solchen Zusammensetzung sowie ein Verfahren zum Herstellen eines entsprechenden Kunststoff-Formkörpers.

Kunststoffe werden seit Jahrzehnten erfolgreich zur Herstellung von Gebrauchsgegenständen eingesetzt, insbesondere als Körbe, Eimer, Aufbewahrungselemente für Büro und Wohnraum, Lebensmittelbehälter und Küchenutensilien, wie Kühlschrankdosen, Mikrowellen-Kochgeschirr und dergleichen mehr. Von besonderem Vorteil ist hier, dass dünnwandige Strukturen und Formkörper hergestellt werden können, die leicht und widerstandsfähig sowie flüssigkeitsundurchlässig sind. Darüber hinaus können sie im Spritzgießverfahren relativ unaufwändig und mit geringem Materialeinsatz hergestellt werden. Diese Vorteile bieten sich im Besonderen für Behältnisse aller Art, die als spritzgegossene Kunststoffbehälter vielerlei Anwendungen finden.

Die hierbei verwendeten Kunststoffe werden bislang in aller Regel aus fossilen Rohstoffen, insbesondere aus Erdöl hergestellt. Im Zuge der Diskussion um ein nachhaltiges Wirtschaften, insbesondere hinsichtlich eines nachhaltigen Umgangs mit fossilen Rohstoffen bzw. Energieträgern, versucht man zunehmend, Kunststoffe nicht nur aus fossilen Rohstoffen, sondern wenigstens zum Teil auch aus nachwachsenden Rohstoffen herzustellen. Dies bietet nebenbei den Vorteil, dass der Einkaufspreis des Rohmaterials zum Erzeugen eines Kunststoffs bei Verwendung von nachwachsenden Rohstoffen zumindest zum Teil vom schwankenden Preis für fossile Energieträger abgekoppelt ist. Unter beiden Aspekten ist es wünschenswert, Kunststoffe entweder komplett aus nachwachsenden Rohstoffen oder zumindest zu einem erheblichen Teil aus nachwachsenden Rohstoffen herzustellen.

Aus der WO 2011/101163 A2 ist eine Zusammensetzung für einen Verbundwerkstoff sowie ein Formkörper aus einer solchen Zusammensetzung bekannt geworden, die einen thermoplastischen Kunststoff enthalten, jedoch nicht vollständig aus diesem bestehen. Vielmehr dient der thermoplastische Kunststoff als Matrix für einen hinzugefügten Naturfaseranteil aus Zellulosefasern. Diese Zellulosefasern sind mit einem an die Zellulose angebundenen Haftreduzierungsadditiv ausgerüstet, das mit dem thermoplastischen Kunststoff der Matrix thermodynamisch unverträglich ist. Damit wird erreicht, dass der thermoplastische Kunststoff und das Haftreduzierungsadditiv molekular unmischbar sind. Hierdurch lassen sich Formkörper mit hoher Festigkeit und Haltbarkeit herstellen.

Folgerichtig liegt der Anwendungsbereich der in der WO 2011/101163 A2 offenbarten Zusammensetzung für einen Verbundwerkstoff in der Herstellung von Formkörpern für den Einsatz im Fahrzeuginnenbereich und Fahrzeugaußenbereich.

Eine Zusammensetzung nach diesem Stand der Technik führt also zu Formkörpern mit mechanischen Eigenschaften, insbesondere einer Steifigkeit, die im Fahrzeugbau erwünscht ist, jedoch bei der Herstellung von Spritzgussteilen, die als Behälter insbesondere im Haushalt, und dort insbesondere für Lebensmittel Verwendung finden sollen, unvorteilhaft sind.

Der Stand der Technik setzt bei Kunststoffen mit einem nennenswerten Zelluloseanteil den Schwerpunkt auf die Festigkeit der daraus hergestellten Formkörper, deren Eigenschaftsprofil vergleichbar mit einem technischen Thermoplast ist. Daher fiel es bislang nicht ins Gewicht, dass der Einsatz von solchen Kunststoffen in Spritzgießwerkzeugen, die für gut fließende Materialien, beispielsweise Polypropylen konzipiert wurden, meist nicht möglich ist, jedenfalls dann nicht, wenn dünnwandige Formkörper mit großen Fließwegen innerhalb des Spritzgießwerkzeugs hergestellt werden sollen.

Um beim Endverbraucher eine Akzeptanz für Kunststoffformkörper mit einem nennenswerten Zelluloseanteil zu erreichen, müssen diese Kunststoffformkörper jedoch insbesondere hinsichtlich der Schlagzähigkeit und Elastizität Eigenschaften aufweisen, die möglichst nahe an den Eigenschaften der bisher bekannten, aus fossilen Rohstoffen hergestellten Kunststoffformkörper liegen. Gleichzeitig muss gewährleistet sein, dass ein Kunststoff mit Zellulosefaseranteil im Spritzgießverfahren hergestellt werden kann, um die gewohnte Formenvielfalt bei gewohnter Qualität bereitstellen zu können.

Der vorliegenden Erfindung liegt daher die Aufgabe zugrunde, eine Zusammensetzung für einen Verbundwerkstoff, einen Verbundwerkstoff, einen Kunststoff-Formkörper sowie ein Verfahren zum Herstellen eines Kunststoff-Formkörpers zur Verfügung zu stellen, die einen möglichst hohen Anteil an nachwachsenden Rohstoffen in Form von Zellulosefasern enthalten, im Spritzgießverfahren verarbeitbar bzw. herstellbar sind und hierbei ähnliche Gebrauchseigenschaften aufweisen wie herkömmliche Kunststoffe auf Polyolefin-Basis.

Gelöst ist diese Aufgabe durch eine Zusammensetzung mit den Merkmalen des Anspruchs 1, einen Verbundwerkstoff nach Anspruch 11, einen Kunststoff-Formkörper nach Anspruch 12 sowie ein Verfahren mit den Merkmalen des Anspruchs 14.

Bevorzugte Weiterbildungen der erfindungsgemäßen Zusammensetzung finden sich in den Ansprüchen 2 bis 10; eine bevorzugte Ausgestaltung eines erfindungsgemäßen Kunststoff-Formkörpers ist im Anspruch 13 niedergelegt.

Die erfindungsgemäße Zusammensetzung für einen Verbundwerkstoff enthält also 30 bis 50 Gew-% Zellulosefasern, mehr als 45 Gew-% an mindestens einem thermoplastischen Kunststoff sowie weniger als 10 Gew-% Haftvermittler auf Propylen-Maleinsäureanhydrid-Copolymer-Basis, für eine gleichmäßige Einbettung der Zellulosefasern in der Matrix. Der erfindungsgemäß verwendete Haftvermittler ist matrixverträglich und insbesondere mit Polyolefinen, und hier vor allem mit den verbreitet eingesetzten Materialien Polypropylen und Polyethylen in der Schmelze mischbar, was eine Abkehr von der Lehre des Standes der Technik nach der WO 2011/101163 A2 bedeutet.

Erfindungsgemäß ist nämlich erkannt worden, dass ein matrixverträglicher Haftvermittler auf Propylen-Maleinsäureanhydrid-Copolymer-Basis, der mit den verwendeten Matrixmaterialien, insbesondere Polyolefinen, verträglich ist, erstmals ermöglicht, mehr als 30 Gew-% an Zellulosefasern zu verwenden und dennoch eine Schlagzähigkeit des aus der Zusammensetzung entstehenden Verbundwerkstoffs zu erzielen, die die gewohnten Eigenschaften von insbesondere Kunststoffbehältern für Haushalt und Küche aufweisen. Die von der vorliegenden Erfindung bereitgestellten Kunststoff-Formköper besitzen trotz eines vergleichsweise hohen Anteils an Zellulose, also einem nachwachsenden Rohstoff, hinsichtlich der Schlagzähigkeit, der Elastizität, des optischen Erscheinungsbildes und der Lebensmitteltauglichkeit vergleichbare Eigenschaften, wie die insbesondere für diesen Einsatzzweck bislang verwendeten Formkörper aus Polyolefinen, insbesondere Polypropylen und Polyethylen. Das bisherige Problem von insbesondere Kunststoffbehältern mit einem nennenswerten Anteil an nachwachsenden Rohstoffen, dass diese eine geringe Schlagzähigkeit und somit eine hohe Bruchneigung bei dünnwandiger Ausbildung aufweisen, ist erfindungsgemäß beseitigt. Die aus der erfindungsgemäßen Zusammensetzung hergestellten Formkörper können demnach weiterhin dünnwandig ausgebildet sein. Dies bedingt einen vorteilhaft geringen Materialeinsatz, was zusätzlich wesentlich zur Nachhaltigkeit des Produkts beiträgt.

Erfindungsgemäß ist weiterhin erkannt worden, dass bei einem besonders hohen Anteil an Zellulosefasern, wie in der vorliegenden Erfindung (30 bis 50 Gew-%), die Verwendung eines matrixverträglichen Haftvermittlers für das Fließverhalten einer aufgeschmolzenen Zusammensetzung keineswegs nachteilig ist, da hierdurch die Zellulosefasern gleichmäßig in der Matrix eingebettet werden. Ein gutes Fließverhalten ist jedoch entscheidend für den Einsatz der erfindungsgemäßen Zusammensetzung zur Herstellung eines Formkörpers im Spritzgießverfahren; vor allem dann, wenn im entsprechenden Spritzgießwerkzeug lange Fließwege zurückzulegen sind, wie dies bei dünnwandig ausgebildeten Kunststoffprodukten für Haushalt und Küche die Regel ist. Eine Zusammensetzung nach der vorliegenden Erfindung kann sogar auf herkömmlichen Spritzgießmaschinen, auf denen herkömmliche Thermoplaste, wie Polypropylen und Polyethylen verarbeitet werden, verwendet werden. Es ist also erkannt worden, dass es, jedenfalls bei Zellulosefaseranteilen oberhalb von 30 Gew-%, gerade nicht vorteilhaft ist, wie im Stand der Technik matrixunverträgliche Haftreduzierungsadditive zu verwenden, um eine hohe Fließfähigkeit der aufgeschmolzenen Zusammensetzung erzielen zu können.

Erfindungsgemäß ist somit erkannt worden, dass das Ziel einer hohen Schlagzähigkeit eines aus der erfindungsgemäßen Zusammensetzung hergestellten Kunststoffprodukts, das nur über eine gute Kopplung zwischen den Zellulosefasern und der Matrix erreichbar ist, bei den erfindungsgemäßen Anteilen an Zellulosefasern nicht im Widerspruch zu einer vorteilhaften Fließfähigkeit der aufgeschmolzenen Zusammensetzung steht. Im Gegenteil, die gute Kopplung zwischen Zellulosefasern und Matrix verhindert eine Flockenbildung der Zellulosefasern und sorgt für eine gleichmäßige Einbettung derselben in der Matrix, was sich letztendlich positiv im Fließverhalten auswirkt.

Um für besonders dünnwandige Kunststoffartikel, die im Spritzgießverfahren hergestellt werden sollen, die Fließfähigkeit der aufgeschmolzenen erfindungsgemäßen Zusammensetzung zu optimieren, kann im Rahmen der vorliegenden Erfindung vorgesehen sein, weniger als 10 Gew-% an mindestens einem Fließhilfsmittel und/oder mindestens einem Schlagzähigkeitsmodifikator mit in die Zusammensetzung aufzunehmen. Bei dem bevorzugt verwendeten Fließhilfsmittel bzw. dem Schlagzähigkeitsmodifikator handelt es sich um ein Mittel auf Ethylen-Propylen-Copolymer-Basis. Es ist erfindungsgemäß erkannt worden, dass ein solches Mittel sowohl die Schlagzähigkeit verbessern als auch die Fließfähigkeit optimieren kann, weshalb es je nach den konkret verwendeten Verhältnissen der in der Zusammensetzung enthaltenen Materialien als Fließhilfsmittel und/oder Schlagzähigkeitsmodifikator fungiert. Insbesondere bei höheren Zellulosefaseranteilen (oberhalb von ca. 40 Gew-%) optimiert ein Fließhilfsmittel bzw. Schlagzähigkeitsmodifikator auf Ethylen-Propylen-Copolymer-Basis die Eigenschaften der aufgeschmolzenen Zusammensetzung innerhalb einer Spritzgießmaschine sowie gleichzeitig die Schlagzähigkeit eines im Spritzgießverfahren hergestellten Kunststoff-Formkörpers.

Um die Akzeptanz von Kunststoffprodukten, die aus einer erfindungsgemäßen Zusammensetzung hergestellt werden, beim Endverbraucher weiter zu erhöhen und die erfindungsgemäßen Kunststoff-Formkörper nicht nur vom Gebrauchswert, sondern auch optisch an den bisherigen Stand der Technik anzugleichen, ist es im Rahmen der vorliegenden Erfindung bevorzugt, der Zusammensetzung Pigmente beizumischen, so dass der Verbundwerkstoff sowie die daraus hergestellten Kunststoff-Formkörper eingefärbt werden können. Um die Materialeigenschaften des Verbundwerkstoffs nicht zu beeinträchtigen, ist es erfindungsgemäß bevorzugt, weniger als 5 Gew-% an Pigmenten zuzumischen.

Optimale Eigenschaften der erfindungsgemäßen Zusammensetzung hinsichtlich deren Verarbeitbarkeit im herkömmlichen Spritzgießverfahren auf nichtmodifizierten, herkömmlichen Spritzgießmaschinen sowie hinsichtlich der Eigenschaften von daraus hergestellten Kunststoff-Formkörpern, insbesondere deren Schlagzähigkeit, werden im Rahmen der vorliegenden Erfindung erzielt, wenn die Zusammensetzung ungefähr 40 Gew-% Zellulosefasern (+/- 5 Gew.-%, bevorzugt +/- 2 Gew-%) sowie gleichzeitig 2 bis 4 Gew-% an mindestens einem Fließhilfsmittel bzw. Schlagzähigkeitsmodifikator auf Ethylen-Propylen-Copolymer-Basis enthält.

Der Anteil an mindestens einem thermoplastischen Kunststoff liegt bevorzugt bei 50 bis 60 Gew-% wobei weiter bevorzugt der mindestens eine thermoplastische Kunststoff einen Schmelzflussindex (Melt-Flow-Index - MFI) zwischen 30 und 70 (230°C; 2,16kg) aufweist. Ein besonders hoher MFI des thermoplastischen Kunststoffs ist dann vorteilhaft, wenn der Zellulosefaseranteil relativ hoch, also im oberen Bereich der erfindungsgemäßen 30 bis 50 Gew-% liegt, während bei einem geringeren Zellulosefaseranteil der MFI des thermoplastischen Kunststoffs niedriger liegen kann. Im Ergebnis führt dies jeweils zu einem MFI der Gesamtzusammensetzung von insgesamt ca. 20 bis 40 (230°C; 2,16kg), womit im Spritzgießverfahren hervorragende Ergebnisse erzielt werden können.

Der im Rahmen der vorliegenden Erfindung verwendete thermoplastische Kunststoff umfasst bevorzugt ein oder mehrere Polyolefine und/oder ein oder mehrere Polyester. An Polyolefinen kommen insbesondere Polyethylen, biobasiertes Polyethylen und/oder Polypropylen in Betracht, jeweils gegebenenfalls auch in recycelter Form. Als Polyester werden bevorzugt sogenannte Biokunststoffe, insbesondere Polymilchsäure (Polylactid - PLA), wie Poly-L-Lactid (PLLA) und/oder Poly-D-Lactid (PDLA) eingesetzt. Mit den letztgenannten thermoplastischen Kunststoffen können im Ergebnis Kunststoff-Formkörper hergestellt werden, die vollständig oder nahezu vollständig aus nachwachsenden Rohstoffen bestehen.

Die genannten Beispiele für erfindungsgemäß einsetzbare thermoplastische Kunststoffe sind bevorzugte Materialien, mit denen gute Ergebnisse erzielt werden können. Es soll durch die Nennung dieser Beispiele jedoch nicht ausgeschlossen werden, dass im Rahmen der vorliegenden Erfindung auch weitere thermoplastische Kunststoffe verwendet werden können, beispielsweise weitere Polyolefine, wie Polybutadien, Polyisobutylen etc., weitere Polyester, wie beispielsweise Polyethylenterephthalat (PET), Polycarbonate, Polyhydroxybuttersäure (PHB) etc, sowie Polyurethane und/oder Polyamide.

Im Rahmen der vorliegenden Erfindung lassen sich sehr gute Ergebnisse hinsichtlich der Fließfähigkeit einer aufgeschmolzenen Zusammensetzung und der Schlagzähigkeit von daraus hergestellten Kunststoffformkörpern erzielen, und es ist zu diesem Zweck bevorzugt, wenn die in der Zusammensetzung enthaltenen Zellulosefasern in Pulverform zugemischt werden. Die Korngröße der Zellulosefasern liegt hierbei bevorzugt zwischen 300 und 600 $\mu$m.

Die im Rahmen der vorliegenden Erfindung verwendeten Zellulosefasern können zumindest teilweise aus wiederverwertetem Material (Recyclingmaterial) bestehen, z.B. aus der Wiederverwertung von Faserplatten oder Papier. Hierdurch wird die Nachhaltigkeit von daraus hergestellten Kunststoffformkörpern nochmals erhöht.

Die Erfindung stellt außer der erfindungsgemäßen Zusammensetzung für einen Verbundwerkstoff auch diesen Verbundwerkstoff selbst zur Verfügung, sowie einen Kunststoffformkörper, der als Spritzgussteil mit einer erfindungsgemäßen Zusammensetzung hergestellt ist. Vorzugsweise enthält die Zusammensetzung, aus der dieser Kunststoffformkörper hergestellt wurde, ausschließlich lebensmittelverträgliche Materialien, so dass der Kunststoffformkörper insbesondere im Küchenbereich, beispielsweise als Frischhaltedose und dergleichen verwendbar ist.

Die vorliegende Erfindung stellt schließlich auch ein Verfahren zum Herstellen eines Kunststoffformkörpers zur Verfügung, in welchem eine erfindungsgemäße Zusammensetzung bzw. ein erfindungsgemäßer Verbundwerkstoff zur Herstellung einer Kunststoffschmelze verwendet und diese Kunststoffschmelze in ein Spritzgießwerkzeug eingespritzt wird, um in einer Kavität des Spritzgießwerkzeugs einen Formkörper zu bilden, wonach schließlich der Formkörper abgekühlt und aus dem Spritzgießwerkzeug entformt wird.

Ein Ausführungsbeispiel für eine erfindungsgemäße Zusammensetzung bzw. einen erfindungsgemäßen Verbundwerkstoff und einen daraus hergestellten Kunststoffformkörper wird im Folgenden näher beschrieben und mit dem Stand der Technik verglichen:

Beispiel 1

Zunächst wurde eine Materialzusammensetzung bereitgestellt, enthaltend 40 Gew-% Zellulosefasern in Pulverform, erhältlich unter der Bezeichnung Arbocel® FD-600-30 der Firma JRS® (J. Rettenmaier & Söhne GmbH & Co. KG, Rosenberg), 55 Gew-% an einem leichtfließenden Polypropylen als thermoplastische Matrix, erhältlich unter der Bezeichnung Sabic® PP-FPC 100, 3 Gew-% eines Haftvermittlers auf Propylen-Maleinsäureanhydrid-Copolymer-Basis, erhältlich unter dem Handelsnamen Clariant® Licocene® PP MA 6452 TP, sowie 2 Gew-% eines Fließhilfe- und Schlagzähigkeitsmodifikators auf Ethylen-Proplyen-Copolymer-Basis, erhältlich unter dem Handelsnamen Clariant® Licocene® PP 1302.

Diese Materialzusammensetzung wurde in einem gleichlaufenden Zweischneckenextruder und einem Innenmischer compoundiert und zu einem Granulat verarbeitet. Dieses Granulat wurde in einer handelsüblichen Spritzgießmaschine (Typ Arburg® 270 S Allrounder) zu Schulterstäben verarbeitet. Es handelte sich um Probekörper für Schlagbiegeversuche nach DIN EN ISO 179 mit einer Länge von 80 +/- 2mm, einer Breite von 10,0 +/- 0,2mm, einer Dicke von 4,0 +/- 0,2mm und einer Stützweite von 62 +/- 0,5mm. Zuvor wurde das Granulat bei 80°C mindestens vier Stunden in einem Trockenlufttrockner getrocknet.

Bei der Herstellung der Schulterstäbe wurde der Spritzdruck im Spritzgießwerkzeug mittels Innendruckaufnehmern gemessen. Die Parameter bei der Messung des Spritzdrucks über die Innendruckaufnehmer waren die Folgenden:

## Tabelle 1

Parameter bei der Messung des Spritzdruckes über Innendruckaufnehmer:

| $T_{WZ}$ [°C] Werkzeug | $V_{einspritz}$ [ccm/s] Einspritzgeschwindigkeit | Stufe [ccm] Umschalten Spritzdruck-Nachdruck | Vor-trocknung | Zylinder-temperatur [°C] | Nach-druck [bar] | Nach-druck-zeit [s] | $t_{Kühl}$ [s] Kühlzeit | $V_{dos}$ [ccm] Dosier-Volumen] |
|---|---|---|---|---|---|---|---|---|
| 30 | 10 | 250 bar | 4h bei 80° | 60/185/190/200/205 | 700/700/25 | 0.2/14/0.25 | 31 | 18 |

Um die Charpy-Schlagzähigkeit der Probekörper zu ermitteln, wurde ein Kerbschlagbiegeversuch nach DIN EN ISO 179 durchgeführt und die Schlagzähigkeit gemäß folgender Formel berechnet:

$$a_{cU} = \frac{W}{d * b} * 10^3$$

wobei W die Schlagarbeit in J, d die Dicke des Prüfkörpers in Millimetern, b die Breite des Prüfkörpers in Millimetern und $a_{cU}$ die Charpy-Schlagzähigkeit ungekerbt in kJ/m$^2$ ist.

Der beim Herstellen der Probekörper ermittelte Spritzdruck im Inneren des Spritzgießwerkzeugs korreliert sehr gut mit der Viskosität bzw. der Fießfähigkeit der compoundierten Zusammensetzung. Das heißt, je niedriger der Spritzdruck ist, umso besser ist die Fließfähigkeit des Materials.

Zusätzlich wurde der Schmelzindex (MFI - Melt Flow Index) des Compounds ermittelt. Der Schmelzindex MFI gibt diejenige Masse der Probe an, die in einer bestimmten Zeit unter festgelegten Bedingungen durch eine Düse gedrückt wird. Sie dient zur Beurteilung des Fließverhaltens von Thermoplasten unter bestimmten Druck- und Temperaturbedingungen.

Die so compoundierte Zusammensetzung bzw. die daraus im Spritzgießverfahren hergestellten Probekörper wiesen eine Schlagzähigkeit von 20 kJ/m$^2$ sowie eine gleichwohl hohe Fließfähigkeit auf, die am Innendruck im Spritzgießwerkzeug (580 bar) und am MFI (21 g / 10 min) zu ersehen sind (Randbedingungen MFI: 230°C; 2,16 kg).

Die folgende Tabelle zeigt einen Vergleich zwischen der erfindungsgemäßen Zusammensetzung bzw. der daraus hergestellten Prüfkörper mit einem am Markt unter dem Handelsnamen "Fibromer® 30" erhältlichen Compound mit einem Naturfaseranteil von 30 Gew% Zellulosefasern.

### Tabelle 2

| | Schlagzähigkeit | Spritzdruck | MFI (230°C, 2,16kg) |
|---|---|---|---|
| Ausführungsbeispiel | 20 kJ/ m$^2$ | 580 bar | 21 g/10min |
| Stand der Technik | 20 kJ/ m$^2$ | 780 bar | 0,3 g/10min |

In den Prüfkörpern des Ausführungsbeispiels und des Vergleichsmaterials waren die Zellulosefasern nicht sichtbar.

Wie Tabelle 2 zeigt, wiesen die Prüfkörper aus der erfindungsgemäßen Zusammensetzung eine hohe Schlagzähigkeit auf, die mit den Vergleichsprobekörpern der Vergleichszusammensetzung nach dem Stand der Technik übereinstimmte. Gleichzeitig wies die compoundierte Zusammensetzung nach dem vorliegenden Ausführungsbeispiel jedoch eine sehr viel höhere Fließfähigkeit auf, was große Vorteile bei der Verarbeitung bietet. Gleichwohl lag der Zellulosefasergehalt, also der Anteil an nachwachsenden Rohstoffen, deutlich höher als im Vergleichsmaterial nach dem Stand der Technik.

Das im vorliegenden Ausführungsbeispiel zur Herstellung von Prüfkörpern verwendete Material weist also eine gute Balance zwischen Schlagzähigkeit und Fließfähigkeit auf. Gleichzeitig sind schöne Kunststoffoberflächen möglich, da die Zellulosefasern nicht sichtbar sind und das Material sich beliebig einfärben lässt. Aufgrund der isotropen und geringen Schwindung des Materials kommt es an den Bauteilen nur zu einem geringen Verzug. Dies wurde durch die Verwendung eines niedermolekularen Polypropylens in Kombination mit einer sehr kurzen Zellulosefaser und eines optimierten Additivpakets erreicht.

Die vorliegende Erfindung stellt also eine schlagfeste, gut zu verarbeitende und ressourcenschonende Materialkomposition aus einem thermoplastischen Matrixmaterial und einer Zellulosefaser zur Verfügung, welche im Spritzgießverfahren verarbeitet werden kann und mit welcher Kunststoffartikel für Haushalt und Küche in bisher gewohnter Qualität und Optik hergestellt werden können.

**Patentansprüche**

1. Zusammensetzung für einen Verbundwerkstoff, enthaltend:

   - einen Naturfaseranteil aus Zellulosefasern,
   - eine Matrix aus mindestens einem thermoplastischen Kunststoff zur Einbettung der Zellulosefasern,
   - einen Haftvermittler für die Einbettung der Zellulosefasern in der Matrix, **dadurch gekennzeichnet,**

   **dass** die Zusammensetzung enthält:

   - 30 bis 50 Gew-% Zellulosefasern,
   - mehr als 45 Gew-% an mindestens einem thermoplastischen Kunststoff,
   - weniger als 10 Gew-% Haftvermittler auf Propylen-Maleinsäureanhydrid-Copolymer-Basis, für eine gleichmäßige Einbettung der Zellulosefasern in der Matrix.

2. Zusammensetzung nach Anspruch 1, zusätzlich enthaltend:

   weniger als 10 Gew-% an mindestens einem Fließhilfsmittel auf Ethylen-Propylen-Copolymer-Basis und/oder mindestens einem Schlagzähigkeitsmodifikator auf Ethylen-Propylen-Copolymer-Basis.

3. Zusammensetzung nach einem der Ansprüche 1 oder 2, zusätzlich enthaltend:

   weniger als 5 Gew-% Pigmente.

4. Zusammensetzung nach mindestens einem der Ansprüche 1 bis 3, enthaltend ca. 40 Gew-% Zellulosefasern sowie 2 bis 4 Gew-% an mindestens einem Fließhilfsmittel auf Ethylen-Propylen-Copolymer-Basis und/oder mindestens einem Schlagzähigkeitsmodifikator auf Ethylen-Propylen-Copolymer-Basis.

5. Zusammensetzung nach mindestens einem der Ansprüche 1 bis 4, enthaltend 50 bis 60 Gew-% an mindestens einem thermoplastischen Kunststoff.

6. Zusammensetzung nach mindestens einem der Ansprüche 1 bis 5, wobei der thermoplastische Kunststoff einen Melt-Flow-Index (MFI) zwischen 30 und 70 aufweist.

7. Zusammensetzung nach mindestens einem der Ansprüche 1 bis 6, wobei der thermoplastische Kunststoff aus einem oder mehreren Polyolefinen, insbesondere Polyethylen, biobasiertem Polyethylen und/oder Polypropylen, und/oder aus einem oder mehreren Polyestern, insbesondere Polymilchsäure (Polylactid - PLA), wie Poly-L-Lactid (PLLA) und/oder Poly-D-Lactid (PDLA), besteht.

8. Zusammensetzung nach mindestens einem der Ansprüche 1 bis 7, wobei die Zellulosefasern in Pulverform vorliegen.

9. Zusammensetzung nach Anspruch 8, wobei die Korngröße der Zellulosefasern zwischen 300 bis 600 $\mu$m liegt.

10. Zusammensetzung nach mindestens einem der Ansprüche 1 bis 9, wobei die Zellulosefasern zumindest teilweise aus wiederverwertetem Material (Recyclingmaterial) bestehen.

11. Verbundwerkstoff, bestehend aus einer Zusammensetzung nach mindestens einem der Ansprüche 1 bis 10.

12. Kunststoff-Formkörper, hergestellt als Spritzgussteil mit einer Zusammensetzung nach mindestens einem der Ansprüche 1 bis 10.

13. Kunststoff-Formkörper nach Anspruch 12, wobei die Zusammensetzung ausschließlich lebensmittelverträgliche Materialien enthält.

14. Verfahren zum Herstellen eines Kunststoff-Formkörpers, mit den Verfahrensschritten:

- Verwendung einer Zusammensetzung nach mindestens einem der Ansprüche 1 bis 10 und/oder eines Verbundwerkstoffs nach Anspruch 11 zur Herstellung einer Kunststoffschmelze,
- Einspritzen der Kunststoffschmelze in ein Spritzgießwerkzeug, um in einer Kavität des Spritzgießwerkzeugs einen Formkörper zu bilden,
- Abkühlen des Formkörpers und Entformen des Formkörpers aus dem Spritzgießwerkzeug.

Europäisches
Patentamt

European
Patent Office

Office européen
des brevets

**EUROPÄISCHER RECHERCHENBERICHT**

Nummer der Anmeldung

EP 13 19 2225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2011/101163 A2 (FRAUNHOFER GES FORSCHUNG [DE]; ERDMANN JENS [DE]; GANSTER JOHANNES [DE]) 25. August 2011 (2011-08-25) * Beispiele 1,2 * ----- | 1-14 | INV. C08L1/00 C08L1/02 C08L23/06 C08L23/12 C08L23/14 C08L23/16 C08L67/04 |
| Y | US 2006/084729 A1 (CLARKE VINCENT M [US] ET AL) 20. April 2006 (2006-04-20) * Tabelle 1 * ----- | 1-14 | |
| Y | US 2007/208110 A1 (SIGWORTH WILLIAM D [US] ET AL) 6. September 2007 (2007-09-06) * Absatz [0050]; Tabellen 1,3 * ----- | 1-14 | |
| Y | EP 1 990 362 A1 (BOREALIS TECH OY [FI]) 12. November 2008 (2008-11-12) * Absatz [0023]; Ansprüche 1,10; Tabelle 1 * ----- | 1-14 | |
| Y | US 5 288 772 A (HON DAVID N-S [US]) 22. Februar 1994 (1994-02-22) * Beispiel 6 * ----- | 1-14 | |
| Y | US 2007/027234 A1 (SIGWORTH WILLIAM D [US] ET AL) 1. Februar 2007 (2007-02-01) * Absatz [0037]; Tabelle 1 * ----- | 1-14 | |

RECHERCHIERTE SACHGEBIETE (IPC)

C08L

Der vorliegende Recherchenbericht wurde für alle Patentansprüche erstellt

| Recherchenort | Abschlußdatum der Recherche | Prüfer |
|---|---|---|
| München | 26. November 2013 | Zellner, Armin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 19 2225

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2013

| Im Recherchenbericht angeführtes Patentdokument | Datum der Veröffentlichung | Mitglied(er) der Patentfamilie | Datum der Veröffentlichung |
|---|---|---|---|
| WO 2011101163 A2 | 25-08-2011 | DE 102010008780 A1<br>EP 2539396 A2<br>WO 2011101163 A2 | 25-08-2011<br>02-01-2013<br>25-08-2011 |
| US 2006084729 A1 | 20-04-2006 | AT 407969 T<br>CN 101076563 A<br>EP 1799761 A1<br>JP 2008517095 A<br>US 2006084729 A1<br>WO 2006044400 A1 | 15-09-2008<br>21-11-2007<br>27-06-2007<br>22-05-2008<br>20-04-2006<br>27-04-2006 |
| US 2007208110 A1 | 06-09-2007 | AT 479717 T<br>CA 2643440 A1<br>EP 1994064 A1<br>RU 2008139293 A<br>US 2007208110 A1<br>WO 2007130201 A1 | 15-09-2010<br>15-11-2007<br>26-11-2008<br>10-04-2010<br>06-09-2007<br>15-11-2007 |
| EP 1990362 A1 | 12-11-2008 | AT 478113 T<br>CN 101679690 A<br>EP 1990362 A1<br>EP 2150579 A1<br>ES 2350878 T3<br>US 2010190891 A1<br>WO 2008138794 A1 | 15-09-2010<br>24-03-2010<br>12-11-2008<br>10-02-2010<br>27-01-2011<br>29-07-2010<br>20-11-2008 |
| US 5288772 A | 22-02-1994 | KEINE | |
| US 2007027234 A1 | 01-02-2007 | CA 2610869 A1<br>CN 101208384 A<br>EA 200702647 A1<br>EP 1907472 A1<br>JP 2009503197 A<br>KR 20080028871 A<br>US 2007027234 A1<br>US 2010120966 A1<br>WO 2007016277 A1 | 08-02-2007<br>25-06-2008<br>30-06-2008<br>09-04-2008<br>29-01-2009<br>02-04-2008<br>01-02-2007<br>13-05-2010<br>08-02-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011101163 A2